# EUROPÄISCHE PATENTSCHRIFT

(11) **EP 1 732 062 B1**
(45) Veröffentlichungstag und Bekanntmachung des Hinweises auf die Patenterteilung: **14.08.2013**
(21) Anmeldenummer: 06113947.3
(22) Anmeldetag: 15.05.2006
(51) Int. Cl.: G10K 11/172, F02C 7/045, F02C 7/24

(54) **Schalldämpfer**
Silencer
Silencieux

(30) Priorität: 07.06.2005 CH 9552005
(43) Veröffentlichungstag der Anmeldung: 13.12.2006
(73) Patentinhaber: Alstom Technology Ltd, 5400 Baden (CH)
(72) Erfinder: Müller, Christian, 5408, Ennetbaden (CH)
(74) Vertreter: Dimper, Dieter

(56) Entgegenhaltungen:
- EP-A- 0 039 727
- WO-A-02/44539
- US-A- 2 966 954
- US-A- 3 177 972
- US-A- 5 823 600
- US-A- 6 122 892

## Beschreibung

### Technisches Gebiet

Die Erfindung betrifft einen Schalldämpfer für einen Strömungskanal einer Strömungsmaschine, insbesondere in einer Kraftwerksanlage, gemäß dem Oberbegriff des Anspruchs 1.

### Stand der Technik

Gemäß der WO 02/44539 A1 kann der im Querschnitt ringförmige Strömungsraum für den Mantelluftsstrom eines Turbofantriebwerkes die Funktion eines Schalldämpfers für die Geräusche des den Mantelstrom erzeugenden Gebläserades übernehmen, wenn dieser Strömungsraum durch axiale Wände segmentiert wird. Durch die sich in Strömungsrichtung des Mantelluftstroms erstreckenden Wände wird der ringförmige Querschnitt des Strömungskanals gemäß der WO 02/44539A1 vorzugsweise in Ringsegmente mit ungleichen Querschnitten bzw. mit in Umfangsrichtung des Ringquerschnittes ungleich breiten Teilluftströmen unterteilt, die dementsprechend eine unterschiedliche Mächtigkeit aufweisen. In Kombination mit des Weiteren vorgesehenen Verbindungskanälen, welche die vorgenannten Wände quer zur Strömungsrichtung durchsetzen, soll eine besonders stark verminderte Geräuschemission auf der Auslassseite des Turbofantriebwerkes gewährleistet werden.

Die EP 0 039 727 A1 zeigt eine Schalldämpferanordnung für die Eingangs- oder Ausgangsseite einer großen Belüftungs- bzw. Klimaanlage. Dabei wird der ein Gehäuse mit rechteckigem Querschnitt durchsetzende Luftstrom durch in Strömungsrichtung des Luftstromes erstreckte Gitterwände unterteilt, deren Gitterstangen vertikal bzw. senkrecht zur Strömungsrichtung des Luftstromes oder horizontal bzw. parallel zur Strömungsrichtung des Luftstromes angeordnet sein können. Diese Gitterstäbe besitzen einen rechteckigen oder trapezförmigen Querschnitt, wobei die längere Achse des Querschnittes quer zur Strömungsrichtung des Luftstromes liegt. Des Weiteren besitzen die Gitterstäbe eine perforierte Außenhaut, die eine schallabsorbierende Füllung umschließt. Durch die den Luftschall absorbierende Füllung wird für eine begrenzte Zeit eine gute Geräuschminderung gewährleistet.

Im Betrieb der Strömungsmaschine kann es im Laufe der Zeit zu einer Veränderung der physikalischen Eigenschaften der Luftschall absorbierenden Wände kommen. Beispielsweise kommt es zu Ablagerungen von Schmutz an der Außenhaut und im Dämpfermaterial. Hierdurch kann zum einen die Durchlässigkeit der Außenhaut für Luftschall beeinträchtigt werden. Zum anderen kann hierdurch auch die Dämpfungsfähigkeit des Dämpfermaterials beeinträchtigt werden. Da im Betrieb von Strömungsmaschinen relativ große Volumenströme durch den jeweiligen Strömungskanal geführt werden, kann es zwischen den Wänden zu dynamischen Druckänderungen kommen. Es hat sich gezeigt, dass bei Schalldämpfern, die für längere Zeit, z. B. für 1 bis 2 Jahre, in Betrieb sind, die Wände durch diese Druckänderungen zu Schwingungen angeregt werden können. Dies wird auf die oben erläuterte, im Laufe der Zeit auftretende Änderung der physikalischen Eigenschaften der Wände zurückgeführt. Diese Schwingungen der Wände übertragen sich auf den jeweiligen Strömungskanal, so dass eine zunehmende Schwingungsneigung der Wände den sicheren Betrieb der Strömungsmaschine gefährdet.

### Darstellung der Erfindung

Hier will die Erfindung Abhilfe schaffen. Die Erfindung, wie sie in den Ansprüchen gekennzeichnet ist, beschäftigt sich mit dem Problem, für einen Schalldämpfer der eingangs genannten Art, eine verbesserte Ausführungsform anzugeben, bei der insbesondere eine Schwingungsneigung auch bei längerem Betrieb reduziert ist.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die geräuschdämpfende Wirkung des Füllmaterials der Wände langfristig zu erhalten, indem die Wände mit Verbindungskanälen versehen werden, die das Dämpfungsmaterial der Wände durchdringen. Durch diese Verbindungskanäle sind an jeder Wand die beiden voneinander abgewandten, der Gasströmung ausgesetzten Wandaußenseiten kommunizierend miteinander verbunden, so dass Druckunterschiede zwischen diesen beiden Außenseiten durch die Verbindungskanäle hindurch ohne Beeinträchtigung durch das Dämpfungsmaterial ausgeglichen werden.

Die Erfindung nutzt dabei die Erkenntnis, dass die Schwingungserregung der jeweiligen Wand auf Druckunterschiede an deren Außenseiten zurückzuführen ist und durch Ausgleichen dieser Druckunterschiede die treibende Kraft für die Schwingungserregung der Wände reduziert wird.

Weitere wichtige Merkmale und Vorteile des erfindungsgemäßen Schalldämpfers ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: eine stark vereinfachte, prinzipielle Seitenansicht eines in einem Strömungskanal angeordneten Schalldämpfers nach der Erfindung,
- Fig. 2: eine stark vereinfachte, prinzipielle Draufsicht auf den Schalldämpfer,
- Fig. 3: eine vergrößerte Schnittdarstellung durch eine Wand des Schalldämpfers im Bereich eines Verbindungskanals.

### Wege zur Ausführung der Erfindung

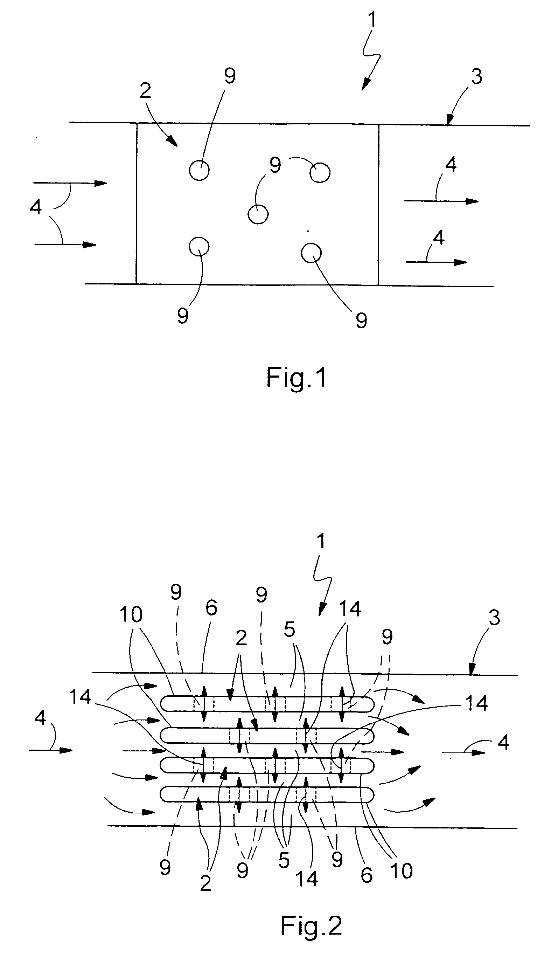

Entsprechend den Fig. 1 und 2 umfasst ein erfindungsgemäßer Schalldämpfer 1 mehrere Wände 2, die in einem Strömungskanal 3 einer im übrigen nicht gezeigten Strömungsmaschine, vorzugsweise einer Kraftwerksanlage, angeordnet sind. Dabei erstrecken sich die einzelnen Wände 2 hier exemplarisch jeweils in einer Ebene. Die einzelnen Wände 2 erstrecken sich parallel zueinander und sind im Strömungskanal 3 außerdem bezüglich einer im Strömungskanal 3 geführten Gasströmung 4, die hier durch Pfeile angedeutet ist, parallel ausgerichtet. Des Weiteren sind die Wände 2 quer zur Strömungsrichtung der Gasströmung 4, also quer zu einer Längsrichtung des Strömungskanal 3 voneinander beabstandet. Im Betrieb der jeweiligen Strömungsmaschine ergibt sich somit eine tangentiale Umströmung der Wände 2.

Zwischen benachbarten Wänden 2 werden dabei Zwischenräume 5 ausgebildet. Derartige Zwischenräume 5 entstehen auch zwischen den beiden außenliegenden Wänden 2 und benachbarten Kanalwänden 6, sofern die außen liegenden Wände - wie hier - von den Kanalwänden 6 quer zur Strömungsrichtung beabstandet angeordnet sind.

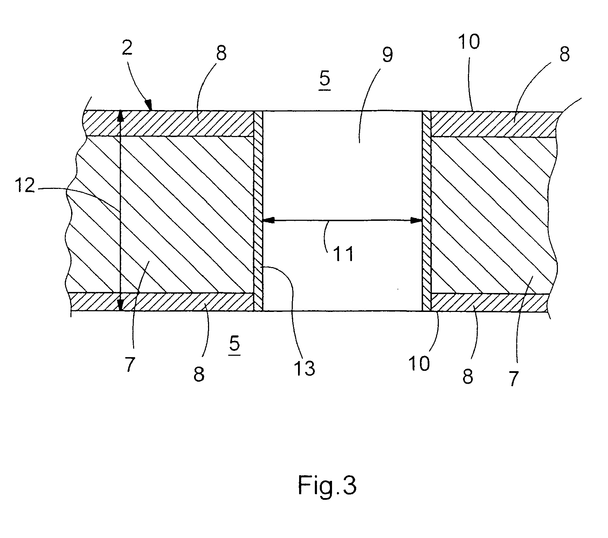

Die Wände 2 des Schalldämpfers 1 sind so ausgestaltet, dass sie hinsichtlich Luftschall absorbierend wirken. Gemäß Fig. 3 wird dies beispielsweise dadurch erreicht, dass die jeweilige Wand 2 in ihrem Inneren ein Dämpfermaterial 7 enthält, das für Luftschall absorbierend wirkt. Als Dämpfermaterial 7 kann beispielsweise Mineralwolle oder ein Schaumstoff, vorzugsweise offenporig, verwendet werden oder ein beliebiges anderes geeignetes Material. Des Weiteren weist die jeweilige Wand 2 eine für Luftschall durchlässige Außenhaut 8 auf, die das Dämpfermaterial 7 umschließt. Die Durchlässigkeit der Außenhaut 8 für Luftschall kann beispielsweise durch eine hier nicht gezeigte Perforation der Außenhaut 8 erreicht werden. Vorzugsweise besteht die Außenhaut 8 aus einem metallischen Blech, insbesondere aus einem metallischen Lochblech. Die Perforation der Außenhaut 8 wird beim Lochblech durch das jeweilige Lochmuster gebildet.

Die in den Fig. 1 und 2 dargestellten, bezüglich der Strömungsrichtung der Gasströmung nebeneinander angeordneten Wände 2 bilden eine nicht näher bezeichnete Wandgruppe. Es ist klar, dass der Schalldämpfer 1 auch mehrere derartige Wandgruppen aufweisen kann, die dann bezüglich der Strömungsrichtung der Gasströmung 4 hintereinander im Strömungskanal 3 angeordnet sind.

Erfindungsgemäß ist nun zumindest eine dieser Wände 2 mit wenigstens einem Verbindungskanal 9 ausgestattet. Im dargestellten Ausführungsbeispiel ist jede Wand 2 mit mehreren solchen Verbindungskanälen 9 ausgestattet. Jeder Verbindungskanal 9 durchsetzt die jeweilige Wand 2 quer zur Strömungsrichtung der Gasströmung 4, also quer zur jeweiligen Wandebene. Außerdem ist jeder Verbindungskanal 9 so ausgestaltet, dass er einen Druckausgleich zwischen den beiden durch die jeweilige Wand 2 voneinander getrennten Zwischenräumen 5 ermöglicht. Vorzugsweise sind die Verbindungskanäle 9 hierzu beidseitig offen. Grundsätzlich ist jedoch auch eine Ausführungsform möglich, bei der der jeweilige Verbindungskanal 9 mit wenigstens einer schwingungsfähigen Membran verschlossen ist, die aufgrund ihrer Elastizität ebenfalls einen Druckausgleich, zumindest was dynamische Druckschwankungen anbelangt, ermöglicht.

Die Verbindungskanäle 9 in den Wänden 2 ermöglichen somit einen Ausgleich von Druckschwankungen, die zwischen den durch die Wände 2 voneinander getrennten Zwischenräumen 5 auftreten können. Durch einen Ausgleich dieser Druckschwankungen werden Druckkraftdifferenzen, die an voneinander abgewandten Längsseiten oder Außenseiten 10 der Wände 2 angreifen, reduziert. Dies führt zu einer Reduzierung der Schwingungsneigung der Wände 2.

In Fig. 2 ist mit Pfeilen 14, die sich parallel zur Längsrichtung der jeweiligen Verbindungskanäle 9 durch die jeweiligen Verbindungskanäle 9 erstrecken, der Druckausgleich symbolisiert, der durch die Verbindungskanäle 9 zwischen den durch die jeweilige Wand 2 voneinander getrennten Zwischenräumen stattfinden kann.

Wie den Fig. 1 und 2 zu entnehmen ist, können die einzelnen Verbindungskanäle 9 innerhalb der jeweiligen Wand 2 z. B. quer zur Strömungsrichtung der Gasströmung 4 nebeneinander, also in Fig. 1 übereinander, angeordnet sein. Zusätzlich oder alternativ können die einzelnen Verbindungskanäle 9 auch in der Strömungsrichtung der Gasströmung 4 hintereinander angeordnet sein. Dabei ist die Verteilung der einzelnen Verbindungskanäle 9 innerhalb der jeweiligen Wand 2 beispielsweise in Abhängigkeit von zu erwartenden Pulsationszentren der ggf. auftretenden Druckschwankungen gewählt. Die hier gezeigte Verteilung der Verbindungskanäle 9 ist daher rein exemplarisch. Insbesondere kann die Verteilung der Verbindungskanäle 9 bei den einzelnen Wänden 2 unterschiedlich sein.

Bei den hier gezeigten Ausführungsformen weisen die Verbindungskanäle 9 jeweils einen kreisförmigen Querschnitt auf. Dabei ist klar, dass die Verbindungskanäle 9 grundsätzlich einen beliebigen Querschnitt aufweisen können. Zweckmäßig sind die Verbindungskanäle 9 hier so dimensioniert, dass ihr Querschnitt eine lichte Weite 11 aufweist, die bezüglich einer Wandstärke 12 der jeweiligen Wand 2 ein Verhältnis zwischen 0,5 bis 1,5 aufweist. Bevorzugt wird jedoch die hier gezeigte Variante, bei der die lichte Weite 11 etwa gleich groß ist die Wandstärke 12.

Entsprechend Fig. 3 durchdringt der jeweilige Verbindungskanal 9 die Außenhaut 8 an beiden Außenseiten 10 sowie das Dämpfermaterial 7. Der hier gezeigte Verbindungskanal 9 ist quer zu seiner Längsrichtung, die senkrecht auf der jeweiligen Wandebene steht, von einer Hülle 13 eingefasst. Durch diese Hülle 13 ist der jeweilige Verbindungskanal 9 vom Dämpfermaterial 7 getrennt sowie von der Außenhaut 8. Zweckmäßig ist besagte Hülle 13 an der Außenhaut 8 befestigt, z. B. darin eingepresst oder damit verlötet oder verschweißt.

Vorzugsweise handelt es sich bei dem Strömungskanal 3 um einen Frischluftkanal, der eine Frischluftströmung zu einem Einlass der jeweiligen Strömungsmaschine führt, die vorzugsweise ein Verdichter einer Turbogruppe ist. Grundsätzlich kann der Strömungskanal 3 auch ein Abgaskanal sein, der eine Abgasströmung von einem Auslass der jeweiligen Strömungsmaschine wegführt, die beispielsweise eine Turbine einer Turbogruppe ist.

### Bezugszeichenliste

- 1: Schalldämpfer
- 2: Wand
- 3: Strömungskanal
- 4: Gasströmung
- 5: Zwischenraum
- 6: Kanalwand
- 7: Dämpfermaterial
- 8: Außenhaut
- 9: Verbindungskanal
- 10: Außenseite von 2
- 11: lichte Weite von 9
- 12: Wandstärke von 2
- 13: Hülle
- 14: Druckausgleich

## Patentansprüche

1. Schalldämpfer für einen Strömungskanal (3) einer Strömungsmaschine, insbesondere einer Kraftwerksanlage,
- mit mehreren im Strömungskanal (3) angeordneten Wänden (2), die sich parallel zu einer im Strömungskanal (3) geführten Gasströmung (4) erstrecken und die quer zur Strömungsrichtung der Gasströmung (4) voneinander beabstandet sind,
- wobei die Wände (2) hinsichtlich Luftschall absorbierend ausgestaltet sind,
- wobei die Wände (2) mit Verbindungskanälen (9) versehen sind, die in der jeweiligen Wand (2) quer zur Strömungsrichtung der Gasströmung (4) nebeneinander und/oder in der Strömungsrichtung der Gasströmung (4) hintereinander verteilt angeordnet sind und die jeweiligen Wände vollständig durchsetzen,
**dadurch gekennzeichnet,**
**dass** die jeweilige Wände (2) eine perforierte Außenhaut (8) aufweisen, die ein Luftschall absorbierendes Dämpfermaterial (7) umschließt, wobei die Verbindungskanäle (9) die Außenhaut (8) und das Dämpfermaterial (7) durchdringen.

2. Schalldämpfer nach Anspruch 1,
**dadurch gekennzeichnet,**
**dass** der jeweilige Verbindungskanal (9) beidseitig offen ist oder mit wenigstens einer schwingungsfähigen Membran verschlossen ist.

3. Schalldämpfer nach Anspruch 1 oder 2,
**dadurch gekennzeichnet,**
**dass** der jeweilige Verbindungskanal (9) einen Querschnitt aufweist, dessen lichte Weite (11) zwischen 0,5 bis 1,5 mal so groß ist wie oder etwa gleich groß ist wie eine Wandstärke (12) der jeweiligen Wand (2).

4. Schalldämpfer nach einem der Ansprüche 1 bis 3,
**dadurch gekennzeichnet,**
**dass** der jeweilige Verbindungskanal (9) einen kreisförmigen Querschnitt aufweist.

5. Schalldämpfer nach einem der Ansprüche 1 bis 4,
**dadurch gekennzeichnet,**
**dass** der jeweilige Verbindungskanal (9) quer zu seiner Längsrichtung von einer Hülle (13) eingefasst ist.

6. Schalldämpfer nach einem der Ansprüche 1 bis 5,
**dadurch gekennzeichnet,**
- **dass** die Hülle (13) den jeweiligen Verbindungskanal (9) vom Dämpfermaterial (7) und/oder von der Außenhaut (8) trennt, und/oder
- **dass** die Hülle (13) an der Außenhaut (8) befestigt ist.

7. Schalldämpfer nach einem der Ansprüche 1 bis 6,
**dadurch gekennzeichnet,**
- **dass** das Dämpfermaterial (7) Mineralwolle oder ein Schaumstoff ist, und/oder
- **dass** die Außenhaut (8) aus einem Blech oder aus einem Lochblech gebildet ist. .

8. Schalldämpfer nach einem der Ansprüche 1 bis 7,
**dadurch gekennzeichnet,**
- **dass** der Strömungskanal (3) die Gasströmung (4) zu einem Einlass der Strömungsmaschine hinführt, oder
- **dass** der Strömungskanal (3) die Gasströmung (4) von einem Auslass der Strömungsmaschine wegführt.

## Claims

1. Silencer for a flow passage (3) of a turbomachine, in particular of a power plant,
- comprising a plurality of walls (2) which are arranged in the flow passage (3), extend parallel to a gas flow (4) directed in the flow passage (3) and are spaced apart transversely to the direction of the gas flow (4),
- the walls (2) being designed so as to absorb airborne noise,
- the walls (2) being provided with connecting passages (9) which are arranged in the respective wall (2) in a distributed manner side by side transversely to the direction of the gas flow (4) and/or one behind the other in the direction of the gas flow (4) and pass completely through the respective walls, **characterized in that** the respective walls (2) have a perforated outer skin (8) which encloses a damper material (7) which absorbs airborne noise, the connecting passages (9) passing through the outer skin (8) and the damper material (7).

2. Silencer according to Claim 1, **characterized in that** the respective connecting passage (9) is open on both sides or is closed by at least one vibratory diaphragm.

3. Silencer according to Claim 1 or 2, **characterized in that** the respective connecting passage (9) has a cross section whose clear width (11) is between 0.5 to 1.5 times as large as or is approximately the same size as a wall thickness (12) of the respective wall (2).

4. Silencer according to one of Claims 1 to 3, **characterized in that** the respective connecting passage (9) has a circular cross section.

5. Silencer according to one of Claims 1 to 4, **characterized in that** the respective connecting passage (9) is lined by a casing (13) transversely to its longitudinal direction.

6. Silencer according to one of Claims 1 to 5, **characterized**
- **in that** the casing (13) separates the respective connecting passage (9) from the damper material (7) and/or from the outer skin (8), and/or
- **in that** the casing (13) is fastened to the outer skin (8).

7. Silencer according to one of Claims 1 to 6, **characterized**
- **in that** the damper material (7) is mineral wool or a foam plastic, and/or
- **in that** the outer skin (8) is formed from a sheet or a perforated sheet.

8. Silencer according to one of Claims 1 to 7, **characterized**
- **in that** the flow passage (3) directs the gas flow (4) to an inlet of the turbomachine, or
- **in that** the flow passage (3) directs the gas flow (4) away from an outlet of the turbomachine.

## Revendications

1. Silencieux pour un conduit d'écoulement (3) d'une turbomachine, en particulier d'une centrale électrique,
- comprenant plusieurs parois (2) disposées dans le conduit d'écoulement (3), lesquelles s'étendent parallèlement à un flux de gaz (4) guidé dans le conduit d'écoulement (3) et sont espacées les unes des autres transversalement à la direction d'écoulement du flux de gaz (4),
- les parois (2) étant configurées de manière à absorber le bruit de l'air,
- les parois (2) étant munies de conduits de liaison (9) qui sont répartis les uns à côté des autres dans la paroi (2) respective transversalement à la direction d'écoulement du flux de gaz (4) et/ou les uns derrière les autres dans la direction d'écoulement du flux de gaz (4) et traversant complètement les parois respectives,
**caractérisé en ce que**
les parois respectives (2) présentent une peau extérieure perforée (8) qui entoure un matériau amortisseur (7) absorbant le bruit de l'air, les conduits de liaison (9) traversant la peau extérieure (8) et le matériau amortisseur (7).

2. Silencieux selon la revendication 1,
**caractérisé en ce que**
le conduit de liaison respectif (9) est ouvert des deux côtés ou est fermé avec au moins une membrane susceptible d'osciller.

3. Silencieux selon la revendication 1 ou 2,
**caractérisé en ce que**
le conduit de liaison respectif (9) présente une section transversale dont la largeur intérieure (11) est égale à ou est comprise entre 0,5 à 1,5 fois une épaisseur de paroi (12) de la paroi respective (2).

4. Silencieux selon l'une quelconque des revendications 1 à 3,
**caractérisé en ce que**
le conduit de liaison respectif (9) présente une section transversale circulaire.

5. Silencieux selon l'une quelconque des revendications 1 à 4,
**caractérisé en ce que** le conduit de liaison respectif (9) est entouré transversalement à sa direction longitudinale par une gaine (13).

6. Silencieux selon l'une quelconque des revendications 1 à 5,
**caractérisé en ce que**
- la gaine (13) sépare le conduit de liaison respectif (9) du matériau amortisseur (7) et/ou de la peau extérieure (8), et/ou
- la gaine (13) est fixée sur la peau extérieure (8).

7. Silencieux selon l'une quelconque des revendications 1 à 6,
**caractérisé en ce que**
- le matériau amortisseur (7) est de la laine minérale ou une mousse, et/ou
- la peau extérieure (8) est formée d'une tôle ou d'une tôle perforée.

8. Silencieux selon l'une quelconque des revendications 1 à 7,
**caractérisé en ce que**
- le conduit d'écoulement (3) guide le flux de gaz (4) jusqu'à une entrée de la turbomachine, ou
- le conduit d'écoulement (3) évacue le flux de gaz (4) depuis une sortie de la turbomachine.
